Europäisches Patentamt

(19) European Patent Office

Office européen des brevets

(11) EP 0 658 583 B1

## (12) EUROPÄISCHE PATENTSCHRIFT

(45) Veröffentlichungstag und Bekanntmachung des Hinweises auf die Patenterteilung:
**16.04.2003 Patentblatt 2003/16**

(51) Int Cl.⁷: **C08G 59/10**, C08G 59/12, C09J 163/00

(21) Anmeldenummer: **94119405.2**

(22) Anmeldetag: **08.12.1994**

(54) **Elastisches Epoxidharz-Härter-System**

Epoxy resin-hardener system having elastic properties

Système résine époxide-durcisseur ayant des propriétés élastiques

(84) Benannte Vertragsstaaten:
**DE**

(30) Priorität: **15.12.1993 DE 4342722**

(43) Veröffentlichungstag der Anmeldung:
**21.06.1995 Patentblatt 1995/25**

(73) Patentinhaber: **Solutia Germany GmbH & Co. KG 55252 Mainz-Kastel (DE)**

(72) Erfinder:
• **Marten, Manfred D-55126 Mainz (DE)**

• **Wehner, Bernhard D-65606 Villmar (DE)**

(74) Vertreter: **Zounek, Nikolai, Dipl.-Ing. Patentanwaltskanzlei Zounek, Industriepark Kalle Albert, Gebäude H391 Rheingaustrasse 190-196 65174 Wiesbaden (DE)**

(56) Entgegenhaltungen:
**EP-A- 0 109 174        EP-A- 0 166 906
EP-A- 0 387 418        WO-A-92/07893
US-A- 4 423 170**

**Beschreibung**

Epoxidharze, insbesondere solche, die aus Bisphenol A und Epichlorhydrin hergestellt werden, sind bekannte Rohstoffe für die Herstellung von qualitativ hochwertigen Gießharzen, Beschichtungsmassen und Klebstoffen. Diese zum Beispiel mit Polyaminen gehärteten Epoxidharze besitzen neben guter Chemikalien- und Lösungsmittelbeständigkeit eine gute Haftfestigkeit auf vielen Untergründen. Häufig ist die Anwendbarkeit dieser Harz/Härter-Systeme jedoch begrenzt durch eine unzureichende Elastizität bzw. Flexibilität im vernetzten Zustand. Insbesondere für Anwendungen, bei denen Temperaturwechselbelastungen durch eine hohe Dehnbarkeit der Beschichtungsstoffe aufgefangen werden müssen, reicht die Elastizität der unmodifizierten Standardepoxidharzsysteme nicht aus. Auf dem Klebstoffsektor werden Epoxidharzsysteme benötigt, die noch bei tiefen Temperaturen, d. h. unter 0 °C, ausreichend elastisch sind. Beispielsweise werden in der Automobilindustrie Epoxidharzklebstoffe verwendet, die in ausgehärtetem Zustand nur wenig flexibel sind. Die mit ihnen erhaltenen Verklebungen weisen zwar eine hohe Zugscherfestigkeit auf, platzen aber bei seitlichem Angriff durch Abschälen leicht ab. Häufig ergeben Klebstoffe, mit denen sich hohe Zugscherfestigkeiten erzielen lassen, nur eine geringe Winkelschälfestigkeit.

In der Automobilindustrie wird beim Verkleben von Blechen häufig so vorgegangen, daß der Klebstoff während des Karosserierohbaus auf geölten Blankblechen zunächst warm aufgebracht, aber noch nicht ausgehärtet wird. Beim Abkühlen erstarrt der Klebstoff. Im Fertigungsprozeß werden die vorgefertigten Teile bzw. die Rohkarossen vor der Härtung in einem Ofen zur Entfernung des Walzfettes in Wasch-, Phosphatier- und kataphoretischen Tauchlack-Bädern behandelt: Es besteht daher die Forderung nach Klebstoffen, die bereits vor der Aushärtung eine ausreichende Auswaschbeständigkeit aufweisen. Insbesondere muß das gehärtete Klebstoffsystem das Blankblech unter der Klebestelle ausreichend vor Korrosion schützen.

Prinzipiell kann man die Elastizität von Epoxidharzsystemen extern durch Weichmacherzusatz oder intern durch Verringerung der Vernetzungsdichte erhöhen. Externe Elastifizierungsmittel sind jedoch nicht reaktiv und werden nicht in das Duromer-Netzwerk eingebaut. Diese Art der Modifizierung ist auf spezifische Anwendungsgebiete beschränkt, da sie eine Reihe von Nachteilen aufweist. So führen diese Zusätze zu einer starken Störung der Duromerstruktur, sie sind in ihrem Weichmachungseffekt bei tiefen Temperaturen begrenzt, neigen bei Temperaturbeanspruchung und Alterung zum Ausschwitzen und die gehärteten Systeme verspröden. Zur internen Erhöhung der Elastizität werden mit den Epoxidharzen oder Härtern reagierende Verbindungen zugesetzt, die in die Vernetzung mit einbezogen werden. Im einzelnen wird die elastifizierende Wirkung durch Einbau von langkettigen aliphatischen oder stark verzweigten Zusätzen in die Harz- oder Härterkomponente erreicht.

Bei Vazirani (Adhesives Age, Oct. 1980, S. 31- 35) werden flexible Ein- und Zweikomponenten-Epoxidharzsysteme auf Basis von Polyoxypropylendi- und -triaminen beschrieben. Die Härtung des Einkomponentensystems erfolgt mit Dicyandiamid.

Die EP 0 354 498 (DE 3 827 626) beschreibt einen reaktiven Schmelzklebstoff, der eine Harzkomponente, mindestens einen thermisch aktivierbaren latenten Härter für die Harzkomponente sowie gegebenenfalls Beschleuniger, Füllstoffe, Thixotropiehilfsmittel und weitere übliche Zusatzstoffe enthält und die Harzkomponente durch Umsetzung von

   a) einem bei Raumtemperatur festen Epoxidharz und
   b) einem bei Raumtemperatur flüssigen Epoxidharz mit
   c) einem linearen Polyoxypropylen mit Amino-Endgruppen

erhalten wird.

Es handelt sich dabei um bei Raumtemperatur feste Harze, die zur Weiterverarbeitung über 50 °C erwärmt werden müssen, um die Viskosität so weit zu senken, daß eine Einarbeitung weiterer Bestandteile des Schmelzklebstoffs ermöglicht wird. Bei der Umsetzung der Epoxidharze mit dem linearen Polyoxypropylen mit Amino-Endgruppen ist ein großer Überschuß an Epoxidgruppen, bezogen auf die Aminogruppen, erforderlich, damit es zu einer vollständigen Abreaktion der Aminogruppen kommt. Typischerweise ist ein 5- bis 10-facher Überschuß vorhanden.

In der Anmeldung WO 93/00381 wird eine Weiterentwicklung der EP 0 354 498 mit verbesserten Tieftemperatureigenschaften beschrieben. Die Aminokomponente besteht darin aus linearen amino-terminierten Polyäthylenglykolen oder linearen und/oder trifunktionellen aminoterminierten Polypropylenglykolen.

In der Anmeldung WO 92/07893 wird ein Elastomer auf Epoxidharz-Basis beschrieben, das in einem zweistufigen Verfahren (Umsetzung einer Mischung von primären Diaminen mit Epoxidverbindungen in Gegenwart von Wasser zu sekundären Diaminen mit nachfolgender Kopplung der Zwischenprodukte mit Diepoxiden und einem monofunktionellen primären Amin) hergestellt wird und für druckempfindliche Klebstoffe verwendet wird.

Die EP 0 109 174 beschreibt eine Epoxidharz-Zusammensetzung aus (A) einem Polyepoxid und (B) einem Aushärtungsmittel, dadurch gekennzeichnet, daß das Polyepoxid mit 50- bis 70 Gew.-% eines Polyoxyalkylenmonoamins mit einer molaren Masse von 900 bis 2000 g/mol umgesetzt wurde. Die in diesem Dokument beschriebene Harz-Härter-Mischung ist in Form eines Ein- oder Zweikomponentensystems brauchbar als flexibler Klebstoff, zeichnet sich durch eine niedrige Viskosität aus und kann deshalb ohne Zugabe von Lösungsmittel verwendet werden. Weiterhin wird festgestellt, daß lediglich eine Serie von Addukten, nämlich die aus ®Jeffamine M-1000 (Fa. Texaco) hergestellten, eine einheitlich niedrige Viskosität unabhängig vom Amingehalt zeigt. Außerdem wird darauf hingewiesen, daß Zusammensetzungen mit weniger als 50 % Polyoxyalkylenmonoamin geringere Flexibilität bei hoher Viskosität und Zusammensetzungen mit mehr als 70 % Polyoxyalkylenmonoamin geringere Adhäsionskraft und abnehmende Viskosität aufweisen.

In der US-Patentschrift 4,423,170 werden Epoxidharz-Zusammensetzungen aus Diepoxiden, die durch partielle Umsetzung der Diepoxide mit Polyoxyalkylenaminen mit einer molaren Masse von 900 bis 2500 g/mol erhalten werden, und einem latenten Härtungsmittel in wäßrigem Medium beschrieben. Epoxidharze werden danach über den Einbau von Polyoxyalkylenpolyaminen in eine wasserverträgliche Form gebracht und in Kombination mit latenten Härtern als Einkomponenten-Klebstoffsystem verwendet. Die Polyoxyalkylenpolyamine sind insbesondere Polyoxyalkylendiamine und Polyoxyalkylenmonoamine. Aus der Patentschrift ist zu entnehmen, daß die Polyoxyalkylenamine überwiegend Polyoxyäthylenamine sein müssen, um eine ausreichende Löslichkeit des Epoxidharzsystems in Wasser zu erreichen (Spalte 3, Zeile 23 bis 26). Mit Polyoxypropylenaminen wird die Zielsetzung des Patentes (Beispiel V), wasserverdünnbare Systeme bereitzustellen, nicht erreicht.

Die Polyoxyalkylenmonoamine mit vorteilhaften Eigenschaften werden durch die Formel (Spalte 2, Zeile 60 bis 67)

$$CH_3 -(O - CH_2 - CH_2)_r - [O - CH_2 - CH (CH_3)]_s - NH_2,$$

in der r von 16 bis 25 und s von 1 bis 6 reicht, gekennzeichnet.

Aufgabe der vorliegenden Erfindung ist es, reaktive flexible Klebstoffe bereitzustellen, die eine hohe Schälfestigkeit nicht nur bei Raumtemperatur, sondern auch bei tiefen Temperaturen, d. h. von 0 °C und niedriger, aufweisen. Dabei sollen die Zugscherfestigkeitswerte nicht beeinträchtigt werden. Insbesondere ist aber ein guter Korrosionsschutz des gehärteten Klebstoffsystems zu gewährleisten. Vorteilhaft ist es, wenn die Epoxid-Harze solche Viskositäten aufweisen, die eine leichte Verarbeitung ohne zusätzlichen apparativen Aufwand ermöglichen.

Es wurde nun überraschenderweise gefunden, daß durch gehärtete Epoxidharze, die durch Umsetzung von 1,2-Epoxiden mit Polyoxypropylenmonoaminen mit Molmassen über 900 g/mol erhalten werden, hervorragend korrosionsbeständige flexible Verklebungen erzielt werden können.

Die vorliegende Erfindung betrifft daher elastische gehärtete Einkomponenten-Epoxidharz-Zusammensetzungen aus

(A) Verbindungen mit mindestens zwei 1,2-Epoxidgruppen, die Umsetzungsprodukte sind aus

(A1) Verbindungen mit mindestens zwei 1,2-Epoxidgruppen pro Molekül und

(A2) Polyoxyalkylenmonoaminen mit einer molaren Masse (Zahlenmittel) größer als 900 g/mol, deren Oxyalkylengruppen ausgewählt sind aus Oxypropylen- und Oxyäthylengruppen, und die einen molaren Anteil von 0 bis zu 20 % Oxyäthyleneinheiten bezogen auf die Gesamtmenge aus Oxypropylen- und Oxyäthyleneinheiten enthalten können,

(A3) gegebenenfalls Polycarbonsäuren und

(B) latenten Härtungsmitteln und

(C) gegebenenfalls üblichen Zusätzen.

Weiter betrifft die Erfindung elastische gehärtete Zweikomponenten-Epoxidharz-Zusammensetzungen aus

(A) Verbindungen mit mindestens zwei 1,2-Epoxidgruppen, die Umsetzungsprodukte sind aus

(A1) Verbindungen mit mindestens zwei 1,2-Epoxidgruppen pro Molekül und

(A2) Polyoxyalkylenmonoaminen mit einer molaren Masse (Zahlenmittel) größer als 900 g/mol, deren Oxyalkylengruppen ausgewählt sind aus Oxypropylen- und Oxyäthylengruppen, und die einen molaren Anteil von 0 bis zu 20 % Oxyäthylerieinheiten bezogen auf die Gesamtmenge aus Oxypropylen- und Oxyäthyleneinheiten enthalten können,

(A3) gegebenenfalls Polycarbonsäuren und

(B) Härtungsmitteln,

wobei die Komponenten (A) und (B) unterhalb der Reaktionstemperatur des Harz-Härter-Systems vermischt werden.

Als Epoxidkomponente (A1) kommen eine Vielzahl der hierfür bekannten Verbindungen in Betracht, die im Mittel mehr als eine Epoxidgruppe, vorzugsweise zwei Epoxidgruppen, pro Molekül enthalten. Diese Epoxidverbindungen (Epoxidharze) können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Äthergruppierungen und ähnliche. Vorzugsweise handelt es sich dabei um Glycidyläther, die sich von mehrwertigen Phenolen, insbesondere Bisphenolen sowie Novolaken ableiten und deren Epoxidäquivalentmassen zwischen 150 und 500, insbesondere jedoch zwischen 150 und 250 g/mol, liegen.

Die mehrwertigen Phenole sind aromatische Verbindungen mit zwei oder mehreren Hydroxylgruppen. Die aromatischen Verbindungen sind ein- oder mehrkernige Aromaten, oder Verbindungen, in denen mehrere solche Aromaten durch direkte Bindungen oder zweiwertige Gruppen wie z.B. Äther-, Keton-, Sulfid-, Sulfon-, Carbonsäureester- oder Carbonamidgruppen verbunden sind.

Als mehrwertige Phenole sind beispielsweise zu nennen: Resorcin, Hydrochinon, 2,2-Bis-(4-hydroxyphenyl)-propan (Bisphenol A), Isomerengemische des Dihydroxydiphenylmethans (Bisphenol F), Tetrabrombisphenol A, 4,4'-Dihydroxydiphenylcyclohexan, 4,4'-Dihydroxy-3,3'-dimethyldiphenylpropan, 4,4'-Dihydroxydiphenyl,   4,4'-Dihydroxybenzophenon,  Bis-(4-hydroxyphenyl)-1,1-äthan,  Bis-(4-hydroxyphenyl)-1,1-isobutan,  Bis-(4-hydroxy-tert.-butylphenyl)-2,2-propan, Bis-(2-hydroxynaphthyl)-methan, 1,5-Dihydroxynaphthalin, Tris-(4-hydroxyphenyl)-methan, Bis-(4-hydroxyphenyl)-äther, Bis-(4-hydroxyphenyl)-sulfon u. a. sowie die Chlorierungs- und Bromierungsprodukte der vorstehend genannten Verbindungen. Ganz besonders bevorzugt werden flüssige Diglycidyläther auf Basis von Bisphenol A mit einer Epoxidäquivalentmasse von 180 bis 190 g/mol.

Es können auch Polyglycidyläther von Polyalkoholen verwendet werden, wie z. B. Äthandiol-1,2-diglycidyläther,  Propandiol-1,2-diglycidyläther,  Propandiol-1,3-diglycidyläther,  Butandioldiglycidyläther,  Pentandioldiglycidyläther (auch Neopentylglykoldiglycidyläther), Hexandioldiglycidyläther, Diäthylenglykoldiglycidyläther, Dipropylenglykoldiglycidyläther, höhere Polyoxyalkylenglykoldiglycidyläther, wie z. B. höhere Polyoxyäthylenglykoldiglycidyläther und Polyoxypropylenglykoldiglycidyläther, Mischpolyoxyäthylen-propylenglykoldiglycidyläther, Polyoxytetramethylenglykoldiglycidyläther, Polyglycidyläther des Glycerins, Trimethylolpropans, Trimethyloläthans, Pentaerythrits, Sorbits, Polyglycidyläther von oxalkylierten Polyolen (wie z. B. des Glycerins, Trimethylolpropans, Pentaerythrits u. a.), Diglydicyläther des Cyclohexandimethanols, Bis-(4-hydroxycyclohexyl)-methans und 2,2-Bis-(4-hydroxycyclohexyl)propans, Polyglycidyläther des Rizinusöls, Triglycidyltris-(2-hydroxyäthyl)-isocyanurat. Vorzugsweise werden Polyoxypropylenglykoldiglycidyläther mit einer Epoxidäquivalentmasse von 150 bis 800, insbesondere von 300 bis 400 g/mol, eingesetzt.

In besonderen Fällen können zusätzlich zu den Polyglycidyläthern geringe Mengen reaktiver Verdünner, wie z. B. Methylglycidyläther, Butylglycidyläther, Allylglycidyläther, Äthylhexylglycidyläther, langkettige aliphatische Glycidyläther, wie z. B. Cetylglycidyläther und Stearylglycidyläther, Monoglycidyläther eines höheren isomeren Alkoholgemisches, Glycidyläther einer Mischung von $C_{12}$ bis $C_{13}$-Alkoholen, Phenylglycidyläther, Kresylglycidyläther, p-t-Butylphenylglycidyläthers, p-Octylphenylglycidyläther, p-Phenyl-phenylglycidyläther, Glycidyläther eines oxalkylierten Laurylalkohols u. a. in Mengen bis zu 30 %, vorzugsweise 10 - 20 %, bezogen auf die Masse der Polyglycidyläther mitverwendet werden. Weiterhin kommen in Frage Poly-(N-glycidyl)-Verbindungen, die erhältlich sind durch Dehydrohalogenierung der Reaktionsprodukte von Epichlorhydrin und Aminen wie Anilin, n-Butylamin, Bis-(4-aminophenyl)methan, m-Xylylendiamin oder Bis-(4-methylaminophenyl)methan. Zu den Poly-(N-glycidyl)-Verbindungen zählen aber auch Triglycidylisocyanurat, N, N'-Diglycidylderivate von Cycloalkylenharnstoffen und Diglycidylderivate von Hydantoinen und andere.

Weiterhin können auch Polyglycidylester von Polycarbonsäuren eingesetzt werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Tetrahydrophthalsäure, Hexahydrophthalsäure, 2,6-Naphthalindicarbonsäure und höheren Dicarbonsäurediglycidylestern, wie z. B. dimerisierter bzw. trimerisierter Linolensäure, erhält. Beispiele sind Adipinsäurediglycidylester, Phthalsäurediglycidylester und Hexahydrophthalsäurediglycidylester.

Eine ausführliche Aufzählung der geeigneten Epoxidverbindungen findet sich in dem Handbuch "Epoxidverbindungen und Epoxidharze" von A. M. Paquin, Springer Verlag, Berlin 1958, Kapitel IV, und in Lee Neville "Handbook of Epoxy Resins", 1967, Chapter 2. Weiterhin sei hier auf die EP-A 272 595 und 286 933 verwiesen.

Es können auch Mischungen von mehreren Epoxidharzen verwendet werden.

Unter den Polyoxypropylenmonoaminen, die gegebenenfalls einen molaren Anteil von bis zu 20 % Polyoxyäthyleneinheiten bezogen auf die Gesamtmenge aus Polyoxypropylen- und Polyoxyäthyleneinheiten enthalten können, haben sich besonders Verbindungen der nachstehenden Formel als brauchbar zur Bildung der Epoxide (A) erwiesen:

$$Z - (O - CH_2 - CH_2)_y - [O - CH_2 - CH (CH_3)]_x - NH_2$$

in der Z ein Kohlenwasserstoffrest mit 1 bis 5 Kohlenstoffatomen ist, besonders bevorzugt ein Methylrest. Die Zahlenwerte von x und y sind so gewählt, daß die Molmasse des Amins mindestens 900 g/mol beträgt, und x mindestens ein fünffaches von y ist, wobei y auch 0 sein kann.

Vorstehend beschriebene Monoamin-Blockpolymere mit Oxypropylengruppen und gegebenenfalls Oxyäthylengruppen werden z. B. von der Firma Texaco Chemical Co., Inc. unter der Handelsbezeichnung ®Jeffamine M-Serie vertrieben. Besonders erwähnt sei hier das Jeffamine M 2005 mit einer molaren Masse von ca. 2000 g/mol und einem Oxypropylen/Oxyäthylen-Verhältnis von 32 : 3 (8,6 % molarer Anteil an Oxyäthylen-Einheiten).

Es ist bevorzugt, daß die Komponente (A2) eine Molmasse von 900 bis 5000, vorzugsweise 900 bis 2500, insbesondere 900 bis 1200 g/mol, aufweist.

Bevorzugt sind Polyoxypropylenmonoamine gegebenenfalls mit bis zu 20 Mol% Oxyäthyleneinheiten mit einer molaren Masse von ca. 1000 g/mol.

Die gegebenenfalls mitverwendeten Polycarbonsäuren (A3) sind vorzugsweise langkettige Dicarbonsäuren. Beispielsweise seien genannt aliphatische Dicarbonsäuren, deren aliphatischer Rest im allgemeinen 1 bis 50, vorzugsweise 2 bis 44 Kohlenstoff-Atome enthält, wie z. B. Bernsteinsäure, Glutarsäure, Adipinsäure, Korksäure, Azelainsäure, Sebacinsäure und Dodecandisäure. Geeignete cycloaliphatische Carbonsäuren, deren cycloaliphatischer Rest zumeist 5 bis 12, vorzugsweise 6 bis 8 C-Atome umfaßt, sind z. B. die verschiedenen Cyclohexandicarbonsäure-Isomeren, Hexahydrophthalsäure und Tetrahydrophthalsäure.

Bevorzugt werden dimere Fettsäuren, die aus ein- oder mehrfach ungesättigten natürlichen oder synthetischen einbasischen aliphatischen Fettsäuren mit 16 bis 22 Kohlenstoffatomen, bevorzugt 18 C-Atomen, nach bekannten Methoden, wie z. B. thermische oder katalytische Dimerisation oder durch Copolymerisation in Gegenwart von polymerisationsfähigen Verbindungen, wie Styrol oder Homologen, Cyclopentadien u. a. hergestellt werden. Insbesondere werden Dimerfettsäuren mit einer Säurezahl von 150 bis 230 mg KOH / g verwendet.

Als Komponente (A3) können auch Oxyalkylen-, vorzugsweise Oxyäthylengruppen enthaltende Dicarbonsäuren verwendet werden mit der Formel

$$HOOC - CH_2 - [OR]_n - O - CH_2\ COOH$$

in der R ein verzweigter oder unverzweigter Alkylenrest mit 2 bis 5, vorzugsweise 2 C-Atomen (Äthylenrest) und n 0 oder eine ganze Zahl von 1 bis 300, vorzugsweise 1 bis 50 und insbesondere 1 bis 25, ist. Beispiele für diese Verbindungen sind: 3,6-Dioxaoctandisäure, 3,6,9-Trioxaundecandisäure, Polyglykoldisäure mit einer molaren Masse von ca. 400 bis 1000 g/mol, bevorzugt von ca. 600 g/mol oder Mischungen aus solchen Säuren.

Die Herstellung dieser Verbindungen ist bekannt (vgl. beispielsweise die DE-A 2 936 123) und erfolgt z. B. durch Oxidation von Polyglykolen in Gegenwart von Katalysatoren.

Vorzugsweise werden zur Herstellung der Epoxidharz-Zusammensetzung 20 bis 80 % der Komponente (A2) und gegebenenfalls 0,1 bis 30 % der Komponente (A3), bezogen auf die Masse der Komponente (A1), eingesetzt.

Die erfindungsgemäßen Epoxidverbindungen (A) werden in der Weise hergestellt, daß die Epoxide (A1) mit den Polyoxyalkylenmonoaminen (A2) unter Rühren und im allgemeinen unter Erwärmen solange umgesetzt werden, bis die theoretisch berechnete Epoxidäquivalentmasse erreicht ist, d. h. bis alle aktiven Wasserstoffatome des Polyoxyalkylenmonoamins mit den im Überschuß vorhandenen Epoxidgruppen reagiert haben. Die Reaktionstemperaturen werden dabei im allgemeinen bei 25 bis 200 °C, vorzugsweise bei 50 bis 150 °C, insbesondere bei 80 bis 130 °C, gehalten. Je nach Temperatur und eingesetzten Epoxiden und Aminen liegen die Reaktionszeiten allgemein zwischen wenigen Minuten und mehreren Stunden. In den meisten Fällen sind keine zusätzlichen Katalysatoren zur quantitativen Umsetzung der Amine mit den Epoxiden notwendig.

Bei der Herstellung der erfindungsgemäßen Epoxidverbindungen A können auch verschiedene Epoxide A1 als Mischung eingesetzt und direkt mit den Polyoxyalkylenmonoaminen A2 und ggf. den Polycarbonsäuren A3 umgesetzt werden. Es kann aber auch ein gezielter, stufenweiser Aufbau mit verschiedenen Epoxiden nacheinander erfolgen derart, daß zunächst ein Epoxid I mit einem Überschuß der Polyoxyalkylenmonoamine zur Reaktion gebracht wird, z. B. 2 Mol aktive Aminwasserstoffe pro Mol Epoxidgruppen, und nach vollständiger Umsetzung der Epoxidgruppen des Epoxids I ein weiteres Epoxid II im Überschuß bezogen auf die noch verfügbaren aktiven Aminwasserstoffatome zugesetzt wird.

Die gegebenenfalls durchzuführende Modifikation mit den Polycarbonsäuren A3 erfolgt im allgemeinen durch Umsetzung des Epoxids A1 mit der Säurekomponente (A3) vor der Reaktion mit den Monoaminen (A2), kann aber prinzipiell auch nach der Epoxid(A1)-Amin(A2)-Reaktion ausgeführt werden.

Die Reaktion der Polycarbonsäure mit den Epoxidverbindungen (A1) oder dem Addukt aus Epoxid und Amin (A1 und A2) kann bei höheren Temperaturen ohne Katalysatoren durchgeführt werden, läuft aber mit Katalysatoren wesentlich schneller ab, wobei sehr niedrige Restsäurezahlen erreicht werden.

Für die gezielte und beschleunigte Umsetzung der Carboxylgruppen der Komponente (A3) mit den Epoxidgruppen der Komponente (A1) bzw. des Addukts aus (A1) und (A2) können als Katalysatoren beispielsweise eingesetzt werden: Natriumhydroxid, Kaliumhydroxid, Lithiumhydroxid, Natriumcarbonat, Chromverbindungen wie $CrCl_3$, $CrO_3$, Chromacetylacetonat, Imidazole, Imidazoline, quaternäre Ammonium- und Phosphoniumverbindungen wie Benzyltrimethylammoniumchlorid, Tetraäthylammoniumchlorid, Tetramethylammoniumchlorid, Benzyltrimethylammoniumhydroxid, Benzyldodecyldimethylammoniumchlorid, Methyltriphenylphosphoniumjodid, Triphenyl-(2,5-dihydroxyphenyl)-phosphoniumhydroxid, Äthyltriphenylphosphoniumacetat, Triphenyläthylphosphoniumbromid sowie organische Phosphine wie Triphenylphosphin, Tricyclohexylphosphin, Tributylphosphin, Cyclohexyloctylphosphin, weiterhin aromatische Amine wie N,N-Dimethylanilin, N,N-Diäthylanilin, N,N-Dimethyl-p-toluidin, N,N-Diäthyl-p-toluidin sowie Amine wie Triäthylamin, Tributylamin, Benzyldimethylamin, Benzyldiäthylamin, Triäthylendiamin, N-Methylmorpholin, N-Methylpiperidin, N-Alkylamine wie z. B. n-Butylamin und Alkanolamine wie Diäthanolamin, Dimethyläthanolamin, Diäthyläthanolamin, Dibutyläthanolamin, Triäthanolamin, Triisopropanolamin, Methyldiäthanolamin, Di-(3-phenoxy-2-hydroxy-propyl)alkylamine wie z. B. Di-(3-phenoxy-2-hydroxypropyl)-n-butylamin u. a.

Diese Katalysatoren werden im allgemeinen in Mengen von 0,01 bis 5 %, vorzugsweise 0,05 bis 2 %, bezogen auf die Summe der Massen von (A1) bis (A3), eingesetzt.

Als Härter (Komponente (B)) für ein Zweikomponentenverfahren können alle bekannten Aminhärtungsmittel für 1,2-Epoxide eingesetzt werden. Beispielhaft seien genannt: aliphatische Amine, wie die Polyalkylenpolyamine, Diäthylentriamin und Triäthylentetramin, Trimethylhexamethylendiamin, 2-Methyl-pentandiamin (Dytek A), Oxyalkylenpolyamine wie Polyoxypropylendi- und -triamin und 1,13-Diamino-4,7,10-trioxatridecan, cycloaliphatische Amine, wie Isophorondiamin (3,5,5-Trimethyl-3-aminomethyl-cyclohexylamin), 4,4'-Diaminodicyclohexylmethan, 3,3'-Dimethyl-4,4'-diamino-dicyclohexylmethan, N-Cyclohexyl-1,3-propandiamin, 1,2-Diaminocyclohexan, Piperazin, N-Aminoäthylpiperazin, die TCD-Diamin-Isomeren (3{oder 4}, 8{oder 9}-Bis(aminomethyl)-tricyclo[5.2.1.0[2,6]]decan), araliphatische Amine, wie Xylylendiamine, aromatische Amine, wie Phenylendiamine, 4,4'-Diaminodiphenylmethan u. a., Addukthärter, die Umsetzungsprodukte von Epoxidverbindungen, insbesondere Glycidyläther des Bisphenol A und F, mit überschüssigem Amin sind, Polyamidoaminhärter, die durch Kondensation von Mono- und Polycarbonsäuren mit Polyaminen erhalten werden, insbesondere durch Kondensation von Dimerfettsäuren mit Polyalkylenpolyaminen, Mannichbasenhärter, die durch Umsetzung von ein- oder mehrwertigen Phenolen mit Aldehyden, insbesondere Formaldehyd, und Polyaminen erhalten werden.

Besonders bevorzugt als Härtungsmittel für die Zweikomponentenarbeitsweise sind Mannichbasen z. B. auf Basis von Phenol, Formaldehyd und m-Xylylendiamin sowie N-Aminoäthylpiperazin und Abmischungen von N-Aminoäthylpiperazin mit Nonylphenol.

Häufig ist es erwünscht mit Einkomponentensystemen zu arbeiten, da vom Verarbeiter keine Abmischung von Einzelkomponenten direkt vor dem Gebrauch des Systems, z. B. als Klebstoff, vorgenommen werden muß. Einkomponentensysteme erhält man durch Mischung der Epoxidkomponente (A) mit einem latenten Härtungsmittel. Solche Mischungen wiesen im allgemeinen eine Lagerstabilität, von mehreren Wochen oder Monaten bei Raumtemperatur auf, d. h. die Viskosität bleibt in diesem Zeitraum konstant oder steigt nur geringfügig. Eines der häufig verwendeten latenten Härtungsmittel ist Dicyandiamid (Cyanoguanidin). Dicyandiamid ist bei Raumtemperatur selbst kein Härtungsmittel. Es zersetzt sich bei höheren Temperaturen und bewirkt über reaktive Spaltprodukte eine Härtung des Epoxidsystems. Flexible Einkomponenten-Epoxidharzsysteme werden durch Dispergierung des latenten Härters, beispielsweise des Dicyandiamid als Komponente B in der flexibilisierten Epoxidharzkomponente A ggf. mit Zusatzstoffen C, wie beispielsweise eines Thixotropiermittels hergestellt.

Die Härter (B) werden im allgemeinen in Mengen von 0,01 bis 50, vorzugsweise von 1 bis 40 %, bezogen auf die Masse der Komponente A eingesetzt. Die Härtung mit Dicyandiamid erfolgt im allgemeinen in Mengen von 0,01 bis 20, vorzugsweise 0,5 bis 15 %, bezogen auf die Masse der Komponente A und kann gegebenenfalls unter Zusatz von 0,01 bis 10, vorzugsweise mit 0,1 bis 7 %, bezogen auf die Masse der Komponente (A) eines Beschleunigers (siehe Beschreibung Zusatzstoffe) erfolgen.

Die Einarbeitung der Härter (B) sowie gegebenenfalls der Beschleuniger muß bei Temperaturen unterhalb der Reaktionstemperatur des entsprechenden Harz-/-Härtersystems erfolgen. Dabei kann es notwendig werden, bei dem Dispergiervorgang das Reaktionsgemisch zu kühlen.

Mit den für das Zweikomponentenverfahren angegebenen Polyaminhärtern ist es prinzipiell möglich, die Komponenten (A) und (B) bei Raumtemperatur zu härten. Bei diesen relativ niedrigen Temperaturen werden aber häufig keine optimalen Eigenschaften des gehärteten Systems erzielt. Für das Einkomponentensystem mit latenten Härtern, wie z. B. Dicyandiamid, ist ohnehin eine erhöhte Temperatur zur Initiierung der Vernetzungsreaktion erforderlich. Die Härtungstemperatur der erfindungsgemäßen Zusammensetzung liegt im allgemeinen bei 5 bis 260 °C, vorzugsweise bei 120 bis 200 °C. Die Härtungszeit bei Temperaturen von 120 bis 200 °C liegt im allgemeinen bei 10 bis 200 Minuten.

Die erfindungsgemäße Zusammensetzung kann neben den Komponenten (A) und (B) noch weitere übliche Zusatzstoffe enthalten wie beispielsweise Beschleuniger bzw. Härtungskatalysatoren, weitere Härter und zusätzliche härtbare Harze oder Extenderharze sowie die üblichen Lackadditive wie Pigmente, Pigmentpasten, Farbstoffe, Antioxidantien, Verkauf- bzw. Verdickungsmittel (Thixotropierungsmittel), Entschäumer und/oder Netzmittel, Reaktiverdünner, Füllstoffe, Weichmacher, flammhemmende Stoffe und dergleichen. Diese Additive können den härtbaren Mischungen gegebenenfalls längere Zeit vorher oder erst unmittelbar vor der Verarbeitung zugegeben werden.

Als Beschleuniger, insbesondere für die Härtung nach dem Zweikomponentenverfahren mit Aminhärtungsmitteln, können beispielsweise Phenole und Alkylphenole mit 1 - 12 C-Atomen in der Alkylgruppe, Kresol, die verschiedenen Xylenole, Nonylphenol, Polyphenole wie Bisphenol A und F, OH-gruppenhaltige aromatische Carbonsäuren wie Salicylsäure, Benzoesäure, p-Hydroxybenzoesäure sowie tert. Amine, wie Benzyldimethylamin, 1,3,5-Tris(dimethylamino)phenol und dergleichen eingesetzt werden.

Häufig ist es erforderlich, auch die Härtung im Einkomponentenverfahren mit latenten Härtungsmitteln, wie z. B. Dicyandiamid, zu beschleunigen. Als geeignete Beschleuniger sind u. a. zu nennen: Tertiäre Amine, wie z. B. Benzyldimethylamin, 1,4-Diazabicyclo[2.2.2]octan (Dabco), N,N-Dimethyläthanolamin, 2,4-Dimethylpyridin, 4-Dimethylaminopyridin, substituierte Harnstoffe, $BF_3$-Aminkomplexe, quaternäre Ammoniumverbindungen, wie z. B. Benzyltrimethylammoniumchlorid, Tetramethylammoniumchlorid, Tetraäthylammoniumchlorid, Benzyldodecyldiäthylammoniumchlorid und insbesondere Imidazoline und Imidazole.

Im einzelnen kommen als Imidazoline beispielsweise folgende Verbindungen in Frage: 2-Methyl-imidazolin, 2-Äthyl-4-methyl-imidazolin, 2-Phenylimidazolin, 2-Undecylimidazolin, 2-Heptadecylimidazolin, 2-Äthylimidazolin, 2-Isopropylimidazolin, 2,4-Dimethyl-imidazolin, 2-Phenyl-4-methyl-imidazolin, 2-Benzylimidazolin, 2-(o-Tolyl)-imidazolin, 2-(p-Tolyl)-imidazolin, Tetramethylen-bis-imidazolin, 1,1,3-Trimethyl-1,4-tetramethylen-bis-imidazolin, 1,3,3-Trimethyl-1,4-tetramethylen-bisimidazolin, 1,1,3-Trimethyl-1,4-tetramethylen-bis-4-methyl-imidazolin, 1,2-Phenylen-bisimidazolin, 1,3-Phenylen-bis-imidazolin, 1,4-Phenylen-bis-imidazolin, 1,4-Phenylen-bis-4-methylimidazolin. Es können auch beliebige Mischungen der Imidazoline eingesetzt werden.

Als Imidazole kommen beispielsweise folgende Verbindungen in Frage: Imidazol, 1-Methyl-imidazol, 2-Methyl-imidazol, 4-Methyl-imidazol, 5-Methyl-imidazol, 1-Äthyl-imidazol, 2-Äthyl-imidazol, 1-Propyl-imidazol, 2-Propyl-imidazol, 2-Isopropyl-imidazol, 1-Butyl-imidazol, 2-Octyl-imidazol, 2-Undecyl-imidazol, 2-Heptadecyl-imidazol, 2-Cyclohexyl-imidazol, 1-Phenyl-imidazol, 2-Phenylimidazol, 2,4-Dimethyl-imidazol, 1,2-Dimethyl-imidazol, 4,5-Dimethyl-imidazol, 2-Äthyl-4-methyl-imidazol, 1-Äthyl-2-methyl-imidazol, 1-Methyl-2-isopropyl-imidazol, 4-Butyl-5-äthyl-imidazol, 2-Cyclohexyl-4-methyl-imidazol, 1-Benzyl-2-methylimidazol, 2-Phenyl-4-methyl-imidazol, 4,5-Diphenyl-imidazol, 2-Äthyl-4-phenylimidazol, 2,4,5-Trimethyl-imidazol, 2,4,5-Tricyclohexyl-imidazol, 1,2,4,5-Tetramethylimidazol sowie Benzimidazole und deren Derivate. Es können auch beliebige Mischungen der Imidazole eingesetzt werden.

Als Verlaufmittel können zum Beispiel Acetale, wie Polyvinylformal, Polyvinylacetal, Polyvinylbutyral, Polyvinylacetobutyral u. a. Polyäthylen- und Polypropylenglykole, Siliconharze, Gemische von Zinkseifen, von Fettsäuren und aromatischen Carbonsäuren, insbesondere handelsübliche Produkte auf Basis von Polyacrylaten eingesetzt werden. Die Verlaufmittel können auch der Komponente (A) in Mengen von 0,1 bis 4 %, vorzugsweise 0,2 bis 2,0 % bezogen auf die Masse von A zugesetzt werden.

Als Haftvermittler und Hydrophobierungsmittel können u. a. Silane eingesetzt werden. Diese können sowohl mit dem anorganischen Untergrund als auch mit dem organischen Polymeren (Klebstoff, Beschichtungsmasse oder dergleichen) unter Ausbildung von festen Bindungen reagieren. Durch die Haftverbesserung können die mechanischen Werte, insbesondere nach Feuchtigkeitsbeanspruchung, verbessert werden. Entsprechende Produkte werden z. B. unter der Bezeichnung ®Dynasylan von Hüls bzw. von Degussa angeboten.

Die Farbstoffe und Pigmente können sowohl anorganischer als auch organischer Natur sein. Beispielsweise seien genannt Titandioxid, Zinkoxid, Ruß, Leitfähigkeitsruß wie z. B. ®Printex XE 2 der Degussa. Die organischen Farbstoffe und Pigmente sind so auszuwählen, daß sie bei den Härtungstemperaturen stabil sind und zu keinen untolerierbaren Farbtonverschiebungen führen.

Geeignete Füllstoffe sind zum Beispiel Quarzmehl, Silikate, Kreide, Gips, Kaolin, Glimmer, Schwerspat, organische Füllstoffe wie z. B. Polyamidpulver und dergleichen. Als Thixotropier- und Verdickungsmittel können beispielsweise ®Aerosil (hochdisperses Siliciumdioxid, z. B. die Typen 150, 200, R 202, R 805 der Degussa), Bentonit-Typen (z. B. ®Sylodex 24 von Grace) sowie ®Bentone (Trademark of NL Chemicals) verwendet werden.

Die Einarbeitung der Zusatz- und Füllstoffe erfolgt im allgemeinen mit Zwangsmischern, wie z. B. Dissolvern und Knetern. Auch hier kann es notwendig sein, durch eine Kühlung des formulierten erfindungsgemäßen Harz/Härter-Systems eine vorzeitige Reaktion der Komponenten zu vermeiden.

Die erfindungsgemäße Epoxidharz-Zusammensetzung kann Verwendung finden zum Beschichten und Verkleben der mannigfaltigsten Werkstoffe, zum Beispiel Metalle, Leichtmetalle, aber auch nichtmetallische Werkstoffe wie Keramik, Glas, Leder, Gummi, Holz, Kartonagen, Kunststoff, Verbundwerkstoffe u.a. Die Verklebungen können mit denselben oder mit anderen Materialien erfolgen. Insbesondere ist die erfindungsgemäße Zusammensetzung geeignet als Konstruktionskleber im Automobilbau. Das Auftragen auf die Substrate erfolgt nach den bekannten Verfahren, wie z.B. Streichen, Walzen oder Ablegen der extrudierten Kleberaupe aus geeigneten Aggregaten.

**Allgemeine Beispiele**

**I a) Herstellung der erfindungsgemäßen Epoxidverbindungen (Komponente A)**

Das Epoxidharz (A1) wird in einem Vierhalskolben mit Rührer, Thermometer und Kühler unter Stickstoff mit der gewünschten Menge des Polyoxypropylenmonoamins nach Definition von A2 bei 80 bis 120 °C so lange erwärmt, bis das Epoxidäquivalent etwa den theoretisch berechneten Wert erreicht hat und konstant bleibt. Nach 30 bis 60 Minuten wird die Epoxidverbindung aus dem Kolben entnommen.

**Beispiel 1**

Zu 350 Gewichtsteilen eines flüssigen Epoxidharzes auf Bisphenol A-Basis mit einem Epoxidäquivalent (EV) von 183 g/mol werden in einem Vierhalskolben mit Rührer, Thermometer und Kühler unter Stickstoff 150 Gewichtsteile eines Polyoxypropylenmonoamins (®Jeffamine der Texaco Chemical Company) mit durchschnittlich x = 16 Propylenoxideinheiten und einer Molmasse von ca. 1000 g/mol gegeben. Dann wird auf 90 °C geheizt und solange bei dieser Temperatur gehalten (ca. 6 Stunden) bis der EV konstant bleibt. Das Reaktionsprodukt wird gekühlt und der Kolben entleert. Das Epoxidharz hat folgende Kenndaten:

| Epoxidäquivalent | 301 g/mol |
| Aminzahl | 17,8 mg KOH/g |
| Viskosität 25 °C | 12030 mPas |

**I b) Herstellung der erfindungsgemäßen Carbonsäure-modifizierten Epoxidverbindungen (Komponente A)**

Das Epoxidharz (A1) wird in einem Vierhalskolben mit Rührer, Thermometer und Kühler unter Stickstoff mit der gewünschten Menge einer Dicarbonsäure versetzt, auf 100 bis 160 °C erwärmt und ein geeigneter Katalysator, z. B. 0,1 % (bezogen auf die Gesamtmasse) Triäthanolamin, zugegeben. Nach ca. 0,5 bis 6 Stunden liegt die Säurezahl bei 0,1 mg KOH / g. Diese Epoxidverbindung wird weiter mit den gewünschten Mengen Polyoxypropylenmonoamin gemäß Beispiel I a) umgesetzt.

**II. Herstellung von Einkomponenten-Klebstoffen**

Die Epoxidharzkomponente (A) wird auf ca. 60 °C erwärmt und das Härtungsmittel Dicyandiamid in dem Harz mit einem Dissolver mit ca. 10000 Umdrehungen/Minute 15 Minuten lang dispergiert. Anschließend wird Aerosil portionsweise zugegeben und je nach der Viskosität der Komponente (A) die erfindungsgemäße Mischung mit 250 bis 4000 Umdrehungen/Minute mit dem Dissolver homogenisiert.

**Beispiel 2**

| Epoxidharz nach Beispiel 1 | 100 GT |
| ®Dyhard 100 (Dicyandiamid der SKW Trostberg) | 10 GT |
| ®Aerosil 200 (Degussa AG) | 4 GT |

**III. Prüfverfahren**

**III.1. Vorbereitung der Prüfkörper zur Messung der Zugscherfestigkeit**

Die Prüfkörper werden nach DIN 53 281 Teil 2 aus Stahlblech Qualität ST 1405 von 0,75 mm Dicke hergestellt.

Die Stahlstreifen werden im nicht entfetteten Zustand auf einer Fläche von 400 mm$^2$ überlappend verklebt. Mit Abstandshaltern aus Polytetrafluoräthylen-Folie wird eine definierte Klebstoffschicht von 0,2 mm Dicke eingestellt. Die Aushärtung des Klebstoffes erfolgt z. B. 60 Minuten bei 180 °C. Nach dem Erkalten der Prüfkörper wird seitlich ausgetretener Klebstoff abgeschnitten.

### III.2. Messung der Zugscherfestigkeit

Die Zugscherfestigkeit der nach III.1. angefertigten Prüfkörper wird nach DIN 53 283 als Mittelwert von 5 Einzelwerten auf einer Zugprüfmaschine nach DIN 51 221, Teil 2 der Firma Zwick gemessen.

| | |
|---|---|
| Zugscherfestigkeit nach DIN 53283 N/mm$^2$ | 14,5 |
| Schälwiderstand nach DIN 53282 N/mm$^2$ | 3,1 |
| Restfestigkeit nach Salzsprühtest (DIN 50021) nach 500 Stunden % | 84 |

### III.3. Vorbereitung der Prüfkörper für den Salzsprühtest

Die nach III.1. vorbereiteten Prüfkörper werden ohne Entfettung mit einem Zweikomponenten Epoxidharz-Primer zweimal grundiert. Dabei wird die gesamte Oberfläche einschließlich der Überlappungszone beschichtet. Nach jeder Behandlung wird abgelüftet und z.B. 10 Minuten bei 120 °C eingebrannt.

### III.4. Salzsprühtest

Die nach III.3. vorbereiteten Prüfbleche werden z. B. 500 Stunden in einem Salzsprühtestgerät nach DIN 50 021 gelagert. Danach werden die Prüfkörper 3 Stunden bei Raumtemperatur getrocknet und die Zugscherfestigkeit nach DIN 53 283 auf einer Zugprüfmaschine nach DIN 51 221, Teil 2, gemessen.

$$\text{Restfestigkeit} = \frac{\text{Zugscherfestigkeit nach z. B. 500 Stunden Salzsprühtest}}{\text{Zugscherfestigkeit vor dem Salzsprühtest}} \times 100 \%$$

### III.5. Vorbereitung der Prüfkörper zur Messung des Schälwiderstandes

Die Prüfkörper werden nach DIN 53 281, Teil 2 aus Stahlblech Qualität ST 1203 von 0,5 mm Dicke hergestellt. Die Stahlstreifen werden mit Aceton entfettet und mit Hilfe eines Schraubstocks zu einem Winkel von 90° gebogen. Der nach II. hergestellte Klebstoff wird mit einem Filmziehgerät in einer Schicht von 0,1 mm auf die Außenfläche des längeren Schenkels aufgetragen. Der so mit Klebstoff beschichtete Metallstreifen wird nun mit einem weiteren nicht mit Klebstoff beschichteten Metallstreifen zusammengefügt, daß sich ein klebefugensymmetrischer T-förmiger Prüfkörper mit einer Klebefläche von 185 x 30 mm ergibt. Die Aushärtung des Klebstoffes erfolgt in 60 Minuten bei 180 °C. Nach dem Abkühlen wird seitlich ausgetretener Klebstoff abgeschnitten.

### III.6. Messung des Schälwiderstandes

Der Schälwiderstand der nach III. 5. hergestellten Prüfkörper wird nach DIN 53 282 als Mittelwert aus 5 Einzelwerten auf einer Zugprüfmaschine nach DIN 51 221, Teil 3 der Firma Zwick bestimmt.

### IV.Ergebnis

Die erfindungsgemäßen Epoxidharz-Klebstoff-Zusammensetzungen ergeben nach dem beschriebenen Prüfverfahren sehr hohe Restfestigkeiten. Die Werte betragen ein Vielfaches der entsprechenden Epoxidharz-Klebstoff-Zusammensetzungen nach dem Stand der Technik. Damit kann eine hohe Korrosionsschutzwirkung der erfindungsgemäßen Epoxidharz-Klebstoff-Systeme nachgewiesen werden.

### Patentansprüche

1.    Elastische gehärtete Einkomponenten-Epoxidharz-Zusammensetzungen aus

(A) Verbindungen mit mindestens zwei 1,2-Epoxidgruppen, die Umsetzungsprodukte sind aus

(A1) Verbindungen mit mindestens zwei 1,2-Epoxidgruppen pro Molekül und

(A2) Polyoxyalkylenmonoaminen mit einer molaren Masse (Zahlenmittel) größer als 900 g/mol, deren Oxyalkylengruppen ausgewählt sind aus Oxypropylen- und Oxyäthylengruppen, und die einen molaren Anteil von 0 bis zu 20 % Oxyäthyleneinheiten bezogen auf die Gesamtmenge aus Oxypropylen- und Oxyäthyleneinheiten enthalten können,

(A3) gegebenenfalls Polycarbonsäuren und

(B) latenten Härtungsmitteln und

(C) gegebenenfalls üblichen Zusätzen.

2. Elastische gehärtete Zweikomponenten-Epoxidharz-Zusammensetzungen aus

(A) Verbindungen mit mindestens zwei 1,2-Epoxidgruppen, die Umsetzungsprodukte sind aus

(A1) Verbindungen mit mindestens zwei 1,2-Epoxidgruppen pro Molekül und

(A2) Polyoxyalkylenmonoaminen mit einer molaren Masse (Zahlenmittel) größer als 900 g/mol, deren Oxyalkylengruppen ausgewählt sind aus Oxypropylen- und Oxyäthylengruppen, und die einen molaren Anteil von 0 bis zu 20 % Oxyäthyleneinheiten bezogen auf die Gesamtmenge aus Oxypropylen- und Oxyäthyleneinheiten enthalten können,

(A3) gegebenenfalls Polycarbonsäuren und

(B) Härtungsmitteln,

wobei die Komponenten (A) und (B) unterhalb der Reaktionstemperatur des Harz-Härter-Systems vermischt werden.

3. Zusammensetzung nach Anspruch 1 oder 2, **dadurch gekennzeichnet, daß** die Polyoxyalkylenmonoamine (A2) die allgemeine Formel

$$Z \text{-}(O \text{-} CH_2 \text{-} CH_2)_y \text{-} [O \text{-} CH_2 \text{-} CH\,(CH_3)]_x \text{-} NH_2,$$

aufweisen, Z ein Kohlenwasserstoffrest mit 1 bis 5 Kohlenstoffatomen ist, und die Zahlenwerte von x und y so gewählt werden, daß die Molmasse des Amins mindestens 900 g/mol beträgt, und x mindestens ein Fünffaches von y ist.

4. Zusammensetzung nach Anspruch 1 oder 2, **dadurch gekennzeichnet, daß** die Komponente (A2) eine Molmasse von 900 bis 5000, vorzugsweise 900 bis 2500, insbesondere 900 bis 1200 g/mol, aufweist.

5. Zusammensetzung nach Anspruch 1 oder 2, **dadurch gekennzeichnet, daß** die Komponente (A3) eine Dimerfettsäure mit einer Säurezahl von 150 bis 230 mg KOH / g ist.

6. Zusammensetzung nach Anspruch 1 oder 2, **dadurch gekennzeichnet, daß** die Komponente (A3) eine Dicarbonsäure der Formel

$$HOOC \text{-} CH_2 \text{-} [OR]_n \, O \text{-} CH_2\, COOH \qquad\qquad (1)$$

ist, in der bedeuten

R = Alkylenrest mit 2 bis 5 C-Atomen und
n = 0 oder eine ganze Zahl von 1 bis 300.

**7.** Zusammensetzung nach Anspruch 6, **dadurch gekennzeichnet, daß** R in Formel (1) einen Äthylenrest und n 1 bis 50 bedeuten.

**8.** Zusammensetzung nach Anspruch 7, **dadurch gekennzeichnet, daß** die Komponente (A3) eine Polyglykoldisäure mit einer molaren Masse von ca. 600 g/mol ist.

**9.** Zusammensetzung nach Anspruch 1 oder 2, **dadurch gekennzeichnet, daß** 20 bis 80 % der Komponente (A2) und gegebenenfalls 0,1 bis 30 % der Komponente (A3), bezogen auf die Masse der Komponente (A1), eingesetzt werden.

**10.** Zusammensetzung nach Anspruch 1, **dadurch gekennzeichnet, daß** das Härtungsmittel Dicyandiamid ist.

**11.** Zusammensetzung nach Anspruch 2, **dadurch gekennzeichnet, daß** das Härtungsmittel N-Aminoäthylpiperazin ist.

**12.** Zusammensetzung nach Anspruch 2, **dadurch gekennzeichnet, daß** das Härtungsmittel eine Mischung aus N-Aminoäthylpiperazin und Nonylphenol ist.

**13.** Zusammensetzung nach Anspruch 1 oder 2, **dadurch gekennzeichnet, daß** sie zusätzlich einen Beschleuniger enthält.

**14.** Verwendung der Zusammensetzung nach Anspruch 1 als Einkomponenten-Klebstoff.

**15.** Verwendung der Zusammensetzung nach Anspruch 1 als Konstruktionsklebstoff im Automobilbau.

**Claims**

**1.** An elastic cured single-component epoxy resin composition comprising

(A) compounds which contain at least two 1,2-epoxide groups and are reaction products of

(A1) compounds containing at least two 1,2-epoxide groups per molecule and

(A2) polyoxyalkylenemonoamines having a molecular weight (number average) greater than 900 g/mol, whose oxyalkylene groups are selected from among oxypropylene and oxyethylene groups, and which may contain a mole fraction of from 0 to 20 % of oxyethylene units based on the total amount of oxypropylene and oxyethylene units,

(A3) if desired, polycarboxylic acids, and

(B) latest hardeners and

(C) if desired, customary additives.

**2.** An elastic cured two-component system comprising

(A) compounds which contain at least two 1,2-epoxide groups and are reaction products of

(A1) compounds containing at least two 1,2-epoxide groups per molecule and

(A2) polyoxyalkylenemonoamines having a molecular weight (number average) greater than 900 g/mol, whose oxyalkylene groups are selected from among oxypropylene and oxyethylene groups, and which may contain a mole fraction of from 0 to 20 % of oxyethylene units based on the total amount of oxypropylene and oxyethylene units,

(A3) if desired, polycarboxylic acids, and

(B) hardeners,

with the components (A) and (B) being mixed below the reaction temperature of the resin/hardener system.

**3.** A composition as claimed in claim 1 or 2, wherein the polyoxyalkylenemonoamines (A2) have the formula

$$Z\text{-}(O\text{-}CH_2\text{-}CH_2)_y\text{-}[O\text{-}CH_2\text{-}CH(CH_3)]_x\text{-}NH_2,$$

where Z is a hydrocarbon radical having from 1 to 5 carbon atoms, and the numerical values of x and y are selected in such a way that the molecular weight of the amine is at least 900 g/mol and x is at least five times y.

**4.** A composition as claimed in claim 1 or 2, wherein the component (A2) has a molecular weight of from 900 to 5000, preferably 900 to 2500, in particular 900 to 1200, g/mol.

**5.** A composition as claimed in claim 1 or 2, wherein the component (A3) is a dimeric fatty acid having an acid number of from 150 to 230 mg KOH/g.

**6.** A composition as claimed in claim 1 or 2, wherein the component (A3) is a dicarboxylic acid of the formula

$$HOOC\text{-}CH_2\text{-}[OR]_n\text{-}O\text{-}CH_2\text{-}COOH \tag{1},$$

where

R    is an alkylene radical having from 2 to 5 carbon atoms and
n    is 0 or an integer from 1 to 300.

**7.** A composition as claimed in claim 6, wherein R in formula (1) is an ethylene radical and n is from 1 to 50.

**8.** A composition as claimed in claim 7, wherein the component (A3) is a polyglycol dicarboxylic acid having a molecular weight of about 600 g/mol.

**9.** A composition as claimed in claim 1 or 2, wherein the amounts used are from 20 to 80 % of component (A2) and, if desired, from 0.1 to 30 % of component (A3), based on the weight of the component (A1).

**10.** A composition as claimed in claim 1, wherein the hardener is dicyandiamide.

**11.** A composition as claimed in claim 2, wherein the hardener is N-aminoethylpiperazine.

**12.** A composition as claimed in claim 2, wherein the hardener is a mixture of N-aminoethylpiperazine and nonylphenol.

**13.** A composition as claimed in claim 1 of 2 which additionally contains an accelerator.

**14.** Use of the composition as claimed in claim 1 as a single-component adhesive.

**15.** Use of the composition as claimed in claim 1 as a structural adhesive for the automobile industry.

**Revendications**

**1.** Compositions élastiques durcies de résine époxyde à un seul composant constituées

(A) de composés avec au moins deux groupes 1,2-époxyde, qui sont des produits de réaction

(A1) de composés avec au moins deux groupes 1,2-époxyde par molécule et
(A2) de polyoxyalkylènemonoamines avec une masse molaire (moyenne en nombre) supérieure à 900 g/mol, dont les groupes oxyalkylène sont choisis parmi les groupes oxypropylène et oxyéthylène, et qui peuvent contenir une proportion molaire de 0 à 20 % de motifs oxyéthylène par rapport à la quantité totale de motifs oxypropylène et oxyéthylène,

(A3) éventuellement de polyacides carboxyliques et

(B) de durcisseurs latents et

(C) éventuellement d'additifs usuels.

2. Compositions élastiques durcies de résine époxyde à deux composants constituées

(A) de composés avec au moins deux groupes 1,2-époxyde, qui sont des produits de réaction

(A1) de composés avec au moins deux groupes 1,2-époxyde par molécule et

(A2) de polyoxyalkylènemonoamines avec une masse molaire (moyenne en nombre) supérieure à 900 g/mol, dont les groupes oxyalkylène sont choisis parmi les groupes oxypropylène et oxyéthylène, et qui peuvent contenir une proportion molaire de 0 à 20 % de motifs oxyéthylène par rapport à la quantité totale de motifs oxypropylène et oxyéthylène,

(A3) éventuellement de polyacides carboxyliques et

(B) de durcisseurs,

les composants (A) et (B) étant mélangés au-dessous de la température de réaction du système résine-durcisseur.

3. Composition selon la revendication 1 ou 2, **caractérisée en ce que** les polyoxyalkylènemonoamines (A2) présentent la formule générale

$$Z\text{-}(O\text{-}CH_2\text{-}CH_2)_y\text{-}[O\text{-}CH_2\text{-}CH(CH_3)]_x\text{-}NH_2,$$

Z est un groupe hydrocarboné ayant de 1 à 5 atomes de carbone, et les valeurs en nombre de x et de y sont choisies de manière à ce que la masse molaire de l'amine s'élève à au moins 900 g/mol, et que x soit au moins cinq fois y.

4. Composition selon la revendication 1 ou 2, **caractérisée en ce que** le composant (A2) présente une masse molaire de 900 à 5000, de préférence de 900 à 2500, en particulier de 900 à 1200 g/mol.

5. Composition selon la revendication 1 ou 2, **caractérisée en ce que** le composant (A3) est un acide gras dimère avec un indice d'acide de 150 à 230 mg KOH/g.

6. Composition selon la revendication 1 ou 2, **caractérisée en ce que** le composant (A3) est un diacide carboxylique de formule

$$HOOC\text{-}CH_2\text{-}[OR]_n\,O\text{-}CH_2COOH \qquad\qquad (1),$$

dans laquelle

R    représente un groupe alkylène avec 2 à 5 atomes de carbone et
n    représente 0 ou un nombre entier de 1 à 300.

7. Composition selon la revendication 6, **caractérisée en ce que** R dans la formule (1) représente un groupe alkylène et n est de 1 à 50.

8. Composition selon la revendication 7, **caractérisée en ce que** le composant (A3) est un diacide polyglycolique avec une masse molaire d'environ 600 g/mol.

9. Composition selon la revendication 1 ou 2, **caractérisée en ce qu'**on met en oeuvre 20 à 80 % du composant (A2) et éventuellement 0,1 à 30 % du composant (A3), par rapport à la masse du composant (A1).

**10.** Composition selon la revendication 1, caractérisée en ce le durcisseur est le dicyandiamide.

**11.** Composition selon la revendication 2, **caractérisée en ce que** le durcisseur est la N-aminoéthylpipérazine.

**12.** Composition selon la revendication 2, **caractérisée en ce que** le durcisseur est un mélange de N-aminoéthylpipérazine et de nonylphénol.

**13.** Composition selon la revendication 1 ou 2, **caractérisée en ce qu'**elle contient un accélérateur additionnel.

**14.** Utilisation de la composition selon la revendication 1 comme colle à un composant.

**15.** Utilisation de la composition selon la revendication 1 comme colle de construction dans la construction automobile.